# EUROPÄISCHE PATENTANMELDUNG

(11) **EP 3 118 053 A1**
(43) Veröffentlichungstag der Anmeldung: **18.01.2017**
(21) Anmeldenummer: 16179573.7
(22) Anmeldetag: 14.07.2016
(51) Int. Cl.: B60M 1/20, B60M 1/30

(54) **STROMSCHIENENAUFHÄNGUNG AN BALKEN**

(30) Priorität: 16.07.2015 DE 102015111584
(71) Anmelder: Furrer + Frey AG, 3000 Bern 6 (CH)
(72) Erfinder: Furrer, Beat, 3012 Bern (CH); Müller, Bernhard, 3604 Thun (CH)
(74) Vertreter: von Bülow & Tamada

(57) **Zusammenfassung**

Die Erfindung betrifft eine Vorrichtung (2) zum Koppeln eines Fahrdrahtes (4) an ein Tragwerk (16), umfassend:
- einen Grundkörper mit wenigstens einem ersten Balken (49) und einem zweiten Balken (50), der stirnseitig mit dem ersten Balken (49) gekoppelt ist,
- wenigstens ein erstes Anbindungselement (52) zum Koppeln des Grundkörpers an eine Hängevorrichtung (74), die eingerichtet ist, den Grundkörper an einem der Tragwerke (16) zu tragen, und
- wenigstens ein zweites Anbindungselement (52) zum Koppeln einer Haltevorrichtung (12, 42) an den Grundkörper, die eingerichtet ist, den Fahrdraht (4) zu halten.

## Beschreibung

Die vorliegende Erfindung betrifft eine Vorrichtung zum Koppeln eines Fahrdrahtes an Tragwerke.

Aus der EP 2 072 322 A1 ist bekannt, dass ein Abstand zwischen zwei Tragwerken, die eine Stromschiene und einen darin eingespannten Fahrdraht halten, nicht beliebig groß gewählt werden darf, damit ein maximaler Profildurchhang nicht überschritten wird. Hierzu schlägt die EP 2 072 322 A1 vor, jedes Tragwerk mit zwei Masten und einem die beiden Masten verbindenden Joch auszuführen. Die Stromschiene wird dann unterhalb des Joches getragen und mit Tragseilen, auf die Stromschiene bezogen in einem Höhenwinkel und Horizontalwinkel an den Masten nach Art einer Schrägseilbrücke verspannt. Auf diese Weise kann der Profildurchhang reduziert und der Abstand der einzelnen Tragwerke erhöht werden.

Die Konstruktion der EP 2 072 322 A1 ließe sich jedoch nicht an einem Tragwerk realisieren, an dem die Stromschiene über einen Ausleger an einem einzigen Mast gehalten wird, weil dann das verspannte Tragseil die Stromschiene in Richtung des einzigen Masts ziehen würde. Die Verspannung eines Tragseil in dem oben genannten Horizontalwinkel bringt zwangsläufig ein statisches Ungleichgewicht in die Gesamtkonstruktion ein, das durch ein symmetrisch zur Stromschiene geführtes Tragseil ausgeglichen werden muss. Derartige Symmetrien gibt es in einem Tragwerk mit einem Mast und einem Ausleger nicht. Unabhängig davon ist zwar durch die Verspannung der Stromschiene an den Masten über die Tragseile der Abstand der Tragwerke untereinander mit einem vertretbaren Profildurchhang grundsätzlich vergrößerbar, die tragende Wirkung der Tragseile und damit die den Profildurchhang aufhebende Wirkung wird jedoch immer kleiner, je spitzer der Höhenwinkel der Tragseile ist, wobei der Höhenwinkel verständlicherweise mit steigendem Abstand der Tragwerke immer spitzer wird. Eine deutliche Steigerung des Abstands der Tragwerke bedingt daher einen konstruktiven Aufwand, der wiederum die montagemechanische Komplexität des Gesamtkonstruktes erhöht und die Materialwahl für die Stromschiene einschränkt, damit diese nicht aufgrund der Zugkräfte durch die Spannseile beschädigt wird. Eine montagemechanische Grundkomplexität ist ohnehin in jedem Fall vorhanden, weil die Tragseile über Spannschlösser verspannt werden müssen.

Aus der DE 196 26 346 A1 ist eine Vorrichtung zum Koppeln eines Fahrdrahtes an ein Tragwerk, umfassend einen Grundkörper mit wenigstens einem ersten Balken und einem zweiten Balken, der stirnseitig mit dem ersten Balken gekoppelt ist, wenigstens ein erstes Anbindungselement zum Koppeln des Grundkörpers an eine Hängevorrichtung, die eingerichtet ist, den Grundkörper an einem der Tragwerke zu tragen, und wenigstens ein zweites Anbindungselement zum Koppeln einer Haltevorrichtung an den Grundkörper, die eingerichtet ist, die den Fahrdraht zu halten.

Es ist Aufgabe der Erfindung, die Aufhängung einer Stromschiene an einem Tragwerk mit einem Mast und einem Ausleger zu ermöglichen und dennoch eine weitere Steigerung des Abstands zwischen den Tragwerken bei einer gleichzeitig möglichst einfachen Gesamtkonstruktion zu erreichen.

Die Aufgabe wird durch die Merkmale des unabhängigen Anspruchs gelöst. Bevorzugte Weiterbildungen sind Gegenstand der abhängigen Ansprüche.

Gemäß einem Aspekt der Erfindung, umfasst eine Vorrichtung zum Anbinden oder Koppeln eines in einer Stromschiene gehaltenem Fahrdrahtes an ein Tragwerk einen sich in Bewegungsrichtung erstreckenden Grundkörper mit wenigstens einem ersten Balken und einem zweiten Balken, der stirnseitig mit dem ersten Balken gekoppelt ist, wenigstens ein erstes Anbindungselement zum Koppeln oder Anbinden des Grundkörpers an eine Hängevorrichtung, die eingerichtet ist, den Grundkörper am Tragwerk zu tragen und wenigstens ein zweites Anbindungselement zum Koppeln oder Anbinden einer Haltevorrichtung an den Grundkörper, die eingerichtet ist, die Stromschiene mit dem Fahrdraht zu halten.

Mit der angegebenen Vorrichtung wird vorgeschlagen, die Stromschiene mit der Haltevorrichtung und dem Fahrdraht an den oben genannten Tragwerken nicht zu verspannen sondern daran aufzuhängen. Hierzu sind die Balken vorhanden, die, wie Schienen zusammengesetzt, die Stromschiene über das Anbindungselement tragen können, ohne dass Kräfte in Balkenrichtung in die Stromschiene eingetragen werden. Auf diese Weise kann die Stromschiene statisch neutral an den Tragwerken gehalten werden unabhängig davon ob diese mit Jochen oder Auslegern ausgeführt sind, ohne dass die Tragwerke allzunah beieinander stehen müssen und ohne dass die Stromschienen aufwändig an den Tragwerken verspannt werden müssen.

In einer Weiterbildung der angegebenen Vorrichtung ist jeder Balken aus zu einem Fachwerk zusammengesetzten Streben ausgebildet. Durch die Ausbildung der Balken als Fachwerk kann einerseits ihr Gewicht reduziert aber andererseits eine dennoch hohe Stabilität erreicht werden. Vorzugsweise sollte der Fachwerkbalken mit einem dreieckigen Profil ausgeführt sein, weil sich so die hohe Stabilität mit einem niedrigstmöglichen Gewicht realisieren lässt.

In einer anderen Weiterbildung der angegebenen Vorrichtung sind der erste Balken und der zweite Balken winklig zueinander angeordnet. Durch die winklige Anordnung der beiden Balken lässt sich mit der angegebenen Vorrichtung der Fahrdraht auch in Verläufen verlegen, in denen die Fahrstrecke eine Kurve durchläuft.

In einer besonderen Weiterbildung der angegebenen Vorrichtung sind der erste Balken und der zweite Balken über eine Form- und/oder Kraftschlussverbindung über wenigstens ein stiftartartiges Verbindungselement miteinander gekoppelt. Durch die Kopplung mit stiftartigen Verbindungelementen, wie beispielsweise Schrauben, Nieten, Gewindebolzen und dergleichen lassen sich die beiden Balken bei der Montage einerseites formschlüssig gegeneinander positionieren und fixieren. Andererseits kann über das stiftartige Verbindungselement beispielsweise durch Vernieten, Verschrauben oder dergleichen ein Kraftschluss hergestellt werden, der den Halt der beiden Balken aneinander dauerhaft sicherstellt.

In einer bevorzugten Weiterbildung der angegebenen Vorrichtung umfasst die Form- und/oder Kraftschlussverbindung wenigstens zwei stiftartige Verbindungselemente mit sich voneinander unterscheidenen Abstandhalterbereichen, die die Stirnseiten der Balken in unterschiedlichen Abständen zueinander halten. Auf diese Weise lässt sich die oben erläuterte winklige Anordnung der beiden Balken zueinander zur Verlegung des Fahrdrahtes in Kurven der Fahrstrecke frei von Biegemomenten realisieren, wodurch die oben genannte statische Neutralität der angegebenen Vorrichtung auch in Kurven der Fahrstrecke sichergestellt ist.

In einer besonders bevorzugten Weiterbildung der angegebenen Vorrichtung sind die stiftartigen Verbindungselemente Schraubverbindungen, die einen Gewindestab und wenigstens eine Mutter umfassen. Schraubverbindungen lassen sich in einfacher Weise befestigen und auch wieder lösen, wodurch eine besonders günstige Montage und Demontage der angegebenen Vorrichtung ermöglicht wird.

In einer zusätzlichen Weiterbildung der angegebenen Vorrichtung ist die Mutter über ein Kugelpfannenlager gegen eine der Stirnseiten des Balkens verschraubt. Durch das Kugelpfannenlager können die beiden Balken in einfacher Weise über die Schraubverbindung in beliebigen stumpfen Winkeln zueinander angeordnet und befestigt werden.

In einer anderen Weiterbildung der angegebenen Vorrichtung ist die Form- und/oder Kraftschlussverbindung im Bereich des ersten Anschlusselementes angeordnet. Das heißt, dass die angegebene Vorrichtung an der Form- und/oder Kraftschlussverbindung aufgehängt wird. Auf diese Weise wird ein Profildurchhang und somit eine mechanische Belastung an der Form- und/oder Kraftschlussverbindung vermieden oder zumindest minimiert.

In einer anderen Weiterbildung der angegebenen Vorrichtung umfasst wenigstens der erste Balken zwei Teilbalken, die gegeneinander schwimmend gelagert sind. Auf diese Weise können analog zu den Schienen beliebig viele Balken aneinander gereiht zu einer durchgängigen Tragestrecke für den Fahrdraht zusammengesetzt werden, wobei über die schwimmende Lagerung Wärmebewegungen der Balken ausgeglichen werden.

In einer zweckmäßigen Weiterbildung sind die Teilbalken zur schwimmenden Lagerung miteinander steckverbunden. Auf diese Weise werden Scherbelastungen auf den Fahrdraht vermieden oder reduziert, die sich ergeben würden, wenn sich die beiden Teilbalken aufgrund der Wärmebewegungen winklig zur Fahrtrichtung gesehen relativ zueinander bewegen würden.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine Draufsicht auf eine Vorrichtung zum Koppeln eines Fahrdrahtes an ein Tragwerk auf einer geraden Strecke,
Fig. 2 eine Draufsicht auf der Vorrichtung in einer Kurve der Strecke.
Fig. 3 eine Schnittansicht der Vorrichtung auf der geraden Strecke aus Fig. 1 entlang der Schnittlinie A-A,
Fig. 4 eine Schnittansicht der Vorrichtung in der Kurve der Strecke aus Fig. 2 entlang der Schnittlinie B-B,
Fig. 5 einen vergrößerten Ausschnitt aus Fig. 3,
Fig. 6 eine perspektivische Ansicht einer Halterung der Vorrichtung an einen Ausleger,
Fig. 7 eine vergrößerte perspektivische Ansicht der Halterung aus Fig. 6,
Fig. 8 eine perspektivische Ansicht auf eine Haltevorrichtung an der Vorrichtung,
Fig. 9 eine vergrößerte perspektivische Ansicht auf die Haltervorrichtung,
Fig. 10 eine Draufsicht im Schnitt auf Verbindungselemente in der Vorrichtung,
Fig. 11 eine vergrößerte Draufsicht im Schnitt auf die Verbindungselemente aus Fig. 10,
Fig. 12 eine noch weitere vergrößerte Draufsicht im Schnitt auf die Verbindungselemente aus Fig. 10 und 11,
Fig. 13 eine perspektivische Ansicht der Vorrichtung,
Fig. 14 eine perspektivische Ansicht auf ein Schwimmlager in der Vorrichtung, und
Fig. 15 eine Draufsicht im Schnitt auf das Schwimmlager in der Vorrichtung.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

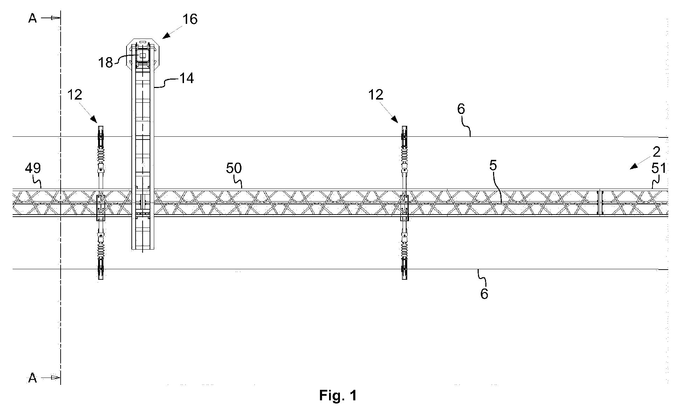

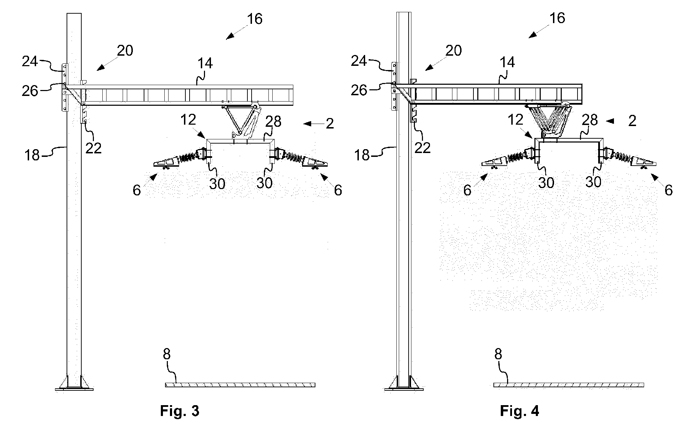

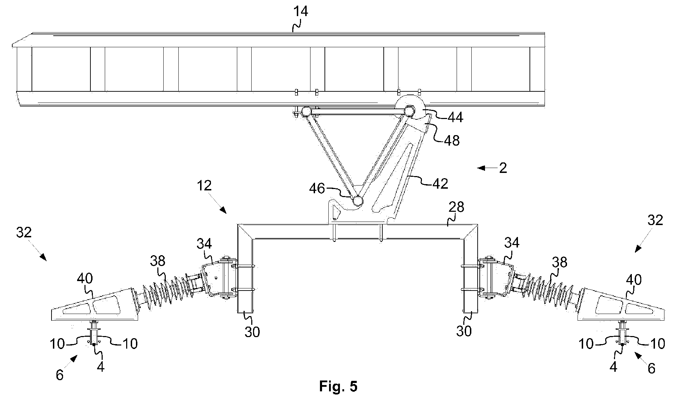

Es wird auf Fig. 1 und 3 sowie die Fig. 2 und 4 Bezug genommen, die entsprechend eine Vorrichtung 2 zum Koppeln eines in Fig. 5 zu sehenden Fahrdrahtes 4 zeigen. Diese Vorrichtung 2 wird nachstehend Anbindungsvorrichtung 2 genannt.

Der in Fig. 5 gezeigte Fahrdraht 4 ist Teil einer entlang eines Streckenverlaufs 5 verlaufenden Fahrleitung 6, die zur Versorgung eines nicht weiter gezeigten Fahrzeuges mit elektrischer Energie vorgesehen ist. Die Fahrleitung 6 ist als Stromschiene in an sich bekannter Weise mit zwei Klemmarmen 10 ausgeführt, die den Fahrdraht 4 zwischen sich einklemmen.

Die Fahrleitung 6 ist an einer Haltevorrichtung 12 gehalten, die wiederum über die Anbindungsvorrichtung 2 an einen Ausleger 14 eines Tragwerkes 16 angebunden ist. Der Ausleger 14 ist an einem Mast 18 des Tragwerkes 16 über ein Fanghakenlager 20 gehalten. Das Fanghakenlager 20 umfasst Fanghakenleisten 22, in die der Ausleger 14 eingehängt ist, sowie ein Stiftlager 24, in das zur Gegenlagerung des Auslegers 14 ein Haltestift 26 eingeschoben ist. Auf weitere Ausführungen zum Fanghakenlager 20 soll nachstehend verzichtet werden.

Bevor auf die Anbindungsvorrichtung 2 näher eingegangen wird, soll zuvor die Haltevorrichtung 12 näher erläutert werden. Die Haltevorrichtung 12 umfasst ein Tragjoch 28, an dessen äußeren Enden sich je eine Tragestange 30 in Richtung zum Schienensystems 8 hin erstreckt.

An jeder Tragestange 30 ist ein Tragearm 32 befestigt, dessen Elemente der Übersichtlichkeit halber nur in Fig. 5 mit einem Bezugszeichen versehen sind. Jeder Tragearm 32 umfasst ein an der entsprechenden Tragestange 30 befestigtes Schwenkgelenk 34, das über einen Isolator 38 von der Fahrleitung 6 elektrisch getrennt ist. Auf einer dem Schwenkgelenk 34 gegenüberliegenden Seite jedes Isolators 38 ist je ein Haltefuß 40 befestigt, an dessen zum Schienensystem 8 hin gerichteten Seite die Fahrleitung 6 befestigt ist.

Am Tragjoch 28 zwischen den Haltestangen 30 ist verschieblich ein Tragehaken 42 mit einem ersten Hakenelement 44 und einem zweiten Hakenelement 46 gehalten. Die Hakenelemente 44, 46 werden an der Anbindungsvorrichtung 2 aufgehängt, wobei zumindest eines der Hakenelemente 44, 46 gegen ein Herausrutschen mit einem Verriegelungselement 48 gesichert wird.

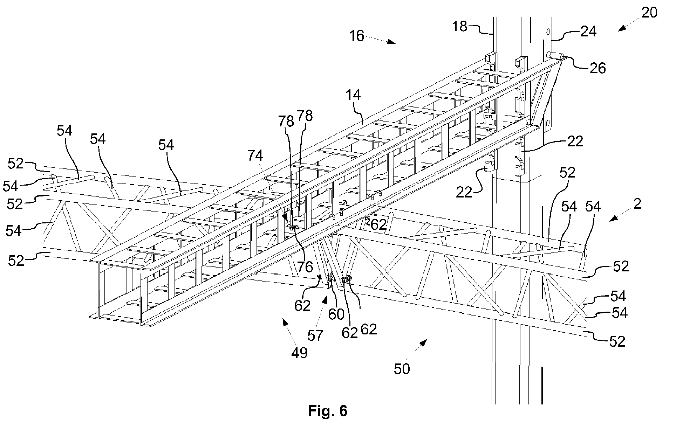

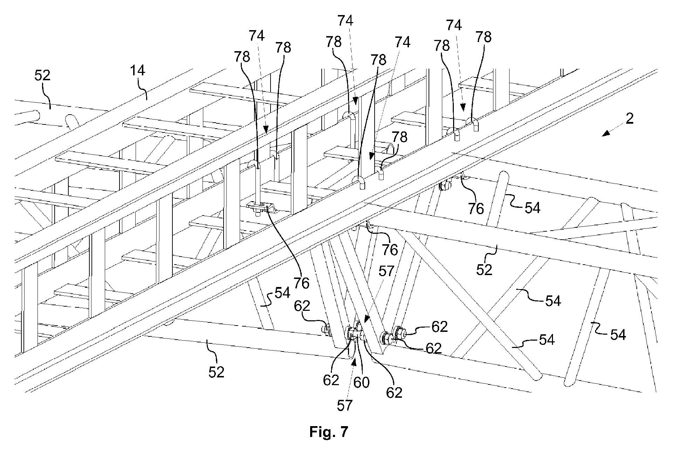

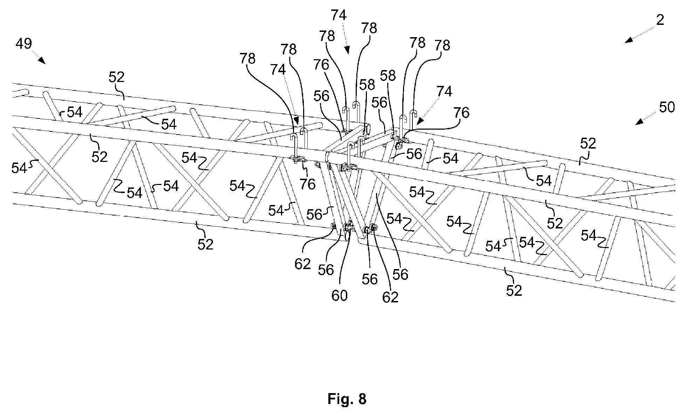

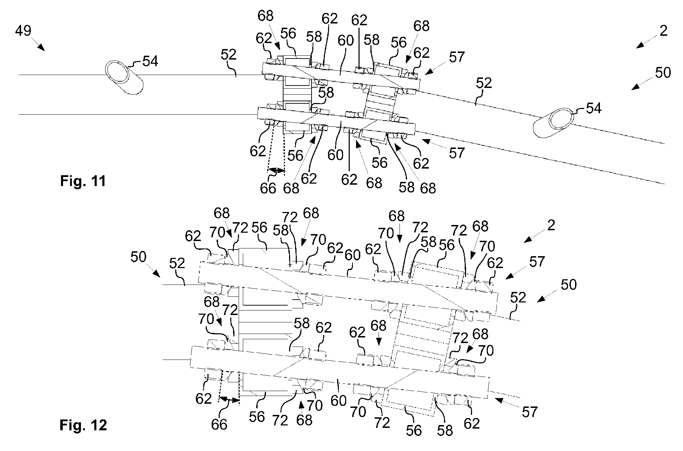

Nachstehend wird die Anbindungsvorrichtung 2 zunächst anhand der Fig. 6 bis 12 im Einzelnen beschrieben.

Die Anbindungsvorrichtung 2 ist wenigstens aus einem ersten Balken 49 und einem zweiten Balken 50 zusammengesetzt, die in Reihe zusammengefügt sind. In einigen Figuren ist darüber hinaus noch ein dritter Balken 51 gezeigt, der an den zweiten Balken 50 angefügt ist. Grundsätzlich kann die Anbindungsvorrichtung 2 aus einer beliebigen Anzahl an in Reihe zusammengefügten Balken 49, 50, 51 zusammengesetzt sein.

In der vorliegenden Ausführung sind die einzelnen Balken 49, 50, 51 als Fachwerkbalken ausgeführt und weisen im Profil einen dreieckigen Querschnitt auf. Das Profil jedes Balkens 49, 50, 51 ist durch drei Längsstäbe 52 begrenzt, die jeweils durch Querstäbe 54 miteinander verbunden sind. Von den Querstäben 54 sind der Übersichtlichkeit halber nicht alle mit einem Bezugszeichen versehen. Stirnseitig sind Längsstäbe 52 mit Kantprofilstäben 56 verbunden.

Die Balken 49, 50, 51 werden über Kraft- und/oder Formschlussverbindungen 57 miteinander verbunden. Diese Kraft- und/oder Formschlussverbindungen 57 sind in den Figuren nicht alle mit einem eigenen Bezugszeichen versehen und in der vorliegenden Ausführung als Schraubverbindungen ausgeführt. Hierzu sind durch die Kantprofilstäbe 56 hindurch Durchgangsbohrungen 58 in Längsrichtung der Balken 49, 50, 51 ausgebildet. Durch diese Durchgangsöffnungen 58 hindurch sind Verbindungselemente in Form von Gewindebolzen 60 geführt und zumindest endseitig mit Muttern 62 verschraubt.

Um zwei der Balken 49, 50, 51 gemäß Fig. 1 auf gerader Strecke zu verbinden, werden die Kantprofilstäbe 56 an den Strirnseiten der Balken 49, 50, 51 derart aneinander gelegt, dass die Durchgangsbohrungen 58 übereinanderliegen. Dann wird durch jede Durchgangsbohrung 58 ein Gewindebolzen 60 geführt. Abschließend wird auf jede Endseite des Gewindebolzens 60 eine Mutter 62 aufgeschraubt, wobei die Muttern 62 gegeneinander festgezogen werden. Damit sich die Muttern 62 nicht lösen, können ferner Reibschlusselemente, wie beispielsweise Federringe zwischen den Muttern 62 und den Kantprofilstäben 56 verwendet werden.

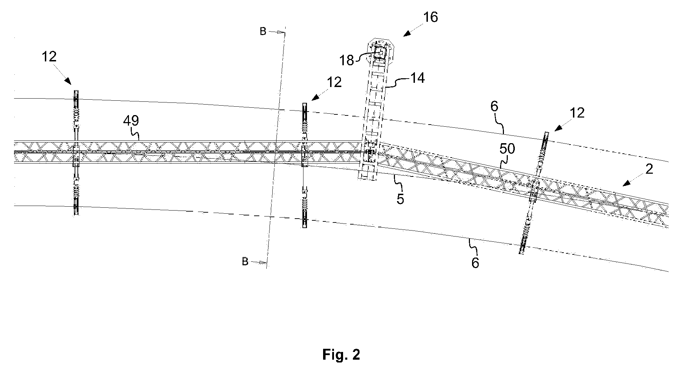

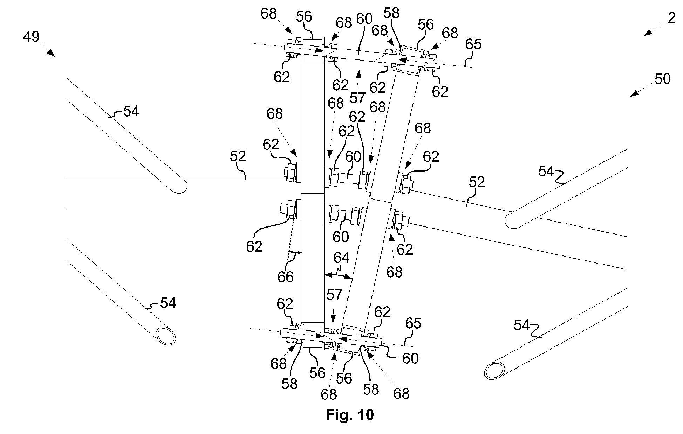

Um beispielsweise den ersten Balken 49 und den zweiten Balken 50 gemäß Fig. 2 in einer Kurve des Streckenverlaufs 5 zu verbinden, werden zunächst auf die einzelnen zu verwendenden Gewindebolzen 60 je zwei Muttern 62 aufgeschraubt und im Wesentlichen mittig auf den Gewindebolzen 60 angeordnet. Im Anschluss werden die Gewindebolzen 60 in die Durchgangsbohrungen 58 durch die Kantprofilstäbe 56 einer der Balken 49, 50 eingeführt. Dann wird der zweite der Balken 49, 50 auf die freie Endseite der Gewindebolzen 60 aufgesetzt, so dass die beiden bereits aufgeschraubten Muttern 62 zwischen den beiden Balken angeordnet sind. Die beiden zu verbindenden Balken 49, 50 werden dabei so angeordnet, dass die Strirnseiten der zu verbindenden Balken 49, 50 in einem in Fig. 10 angedeuteten Kurvenwinkel 64 zueinander stehen und die Durchgangsbohrungen 58 ebenfalls winklig aufeinander zu fluchten. Abschließend werden auf die Enden der Gewindebolzen 60 weitere Muttern 62 aufgeschraubt, wobei die Muttern 62 zwischen den Stirnseiten der zu verbindenden Balken 49, 50 und die endseitig aufgeschraubten Muttern 62 derart gegeneinander verschraubt werden, dass die Kantprofilstäbe 56 zwischen den Muttern 62 eingeklemmt werden.

Um den Kurvenwinkel 64 auszubilden müssen die Stirnflächen der zu verbindenden Balken 49, 50 an verschiedenen Gewindestäben 60 einen voneinander sich unterscheidenden Abstand 65 aufweisen, der in Fig. 10 angedeutet ist. Wie hierbei in Fig. 10 zu sehen ist, kann bei einem sehr kleinen Abstand 65 auch auf die Verwendung der inneren Muttern 62 verzichtet werden.

Da die Muttern 62 in diesem Fall nicht flächig auf den Kantprofilstäben 56 aufliegen, sondern in einem in den Fig. 10-12 angedeuteten Auflagewinkel 66, können zur Stabilisierung zwischen den Muttern 62 und den Kantprofilstäben 56 Kugelpfannenlager 68 angeordnet werden. Jedes Kugelpfannenlager 68 besitzt eine Kugelscheibe 70 und eine Lagerschale 72, in die die Kugelscheibe 70 einlegbar ist. Die Elemente 70, 72 des Kugelpfannenlagers 68 können auch optional einstückig mit den Muttern 62 und/oder Kantprofilstäben 56 ausgeführt sein. Die Kugelscheibe 70 kann in der Lagerschale 72 eine beliebige sphärisch Lage einnehmen und so den Auflagewinkel 66 ausgleichen. Auf diese Weise ist Auflagefläche mit einem großen Kontaktbereich zwischen den Muttern 62 und den Kantprofilstäben 56 sichergestellt. Auch können Reibschlusselemente wie der oben genannten Federring zum Einsatz kommen, um ein Lösen der Schraubverbindung zu vermeiden.

Die gerade oder winklig in der zuvor genannten Weise verschraubten Balken 49, 50 sind an den Auslegern 14 der Tragwerke 16 aufgehängt. Hierzu kommen Hängevorrichtungen 74 zum Einsatz, die in der vorliegenden Ausführung jede eine Halbschelle 76 und zwei Hängehaken 78 umfassen. Von den Haltevorrichtungen 74 und ihren Elementen 76, 78 sind in den Figuren der Übersichtlichkeit halber nicht alle mit einem eigenen Bezugszeichen versehen.

Im Weiteren wird auf die Aufhängung der Anschlussvorrichtung 2 an die Ausleger 14 der Tragwerke 16 anhand der Fig. 5 bis 9 näher eingegangen werden.

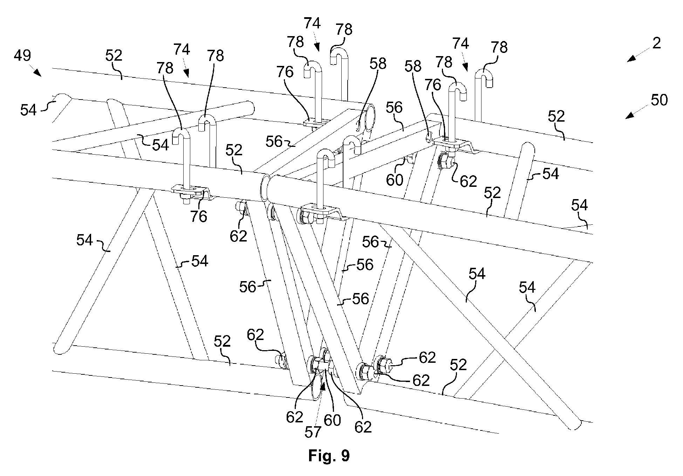

Zum Aufhängen der Balken 49, 50, 51 werden die Halbschellen 76 in der in Fig. 9 gezeigten Weise vom Schienensystem 8 aus gesehen unter die oberen Längsstäbe 52 der Balken 49, 50, 51 gelegt. Diese oberen Längsstäbe 52 dienen somit gleichzeitig als Anbindungselemente für die Haltevorrichtungen 74. Die Hängehaken 76 wiederum werden an die Ausleger 14 der Tragwerke 16 gehängt.

Auf diese Weise tragen die Ausleger 14 über die Hängehaken 78 die Haltevorrichtungen 74, und die Haltevorrichtungen 74 tragen über die Halbschellen 76 die Balken 49, 50, 51.

In den Haltevorrichtungen 74 sind die Hängehaken 78 mit den Halbschellen 76 über nicht weiter referenzierte Muttern formschlüssig verbunden. Hierzu werden diese Muttern an den Hängehaken 78 unterhalb der Halbschellen 76 angeschraubt, so dass die Halbeschellen 76 auf den Hängehaken 78 aufliegen.

Grundsätzlich können die Hängevorrichtungen 74 an einer beliebigigen Stelle der Balken 50 der Anschlussvorrichtung 2 angeordnet werden. Wie in Fig. 2 angedeutet, sollten die Hängevorrichtungen 74 bei einer Verlegung der Anschlussvorrichtung 2 in einer Kurve des Streckenverlaufs 5 im Bereich der Stirnseiten der Balken 50 angeordnet werden, um einen mechanischen Biegestress auf die Gewindebolzen 60 zu vermeiden.

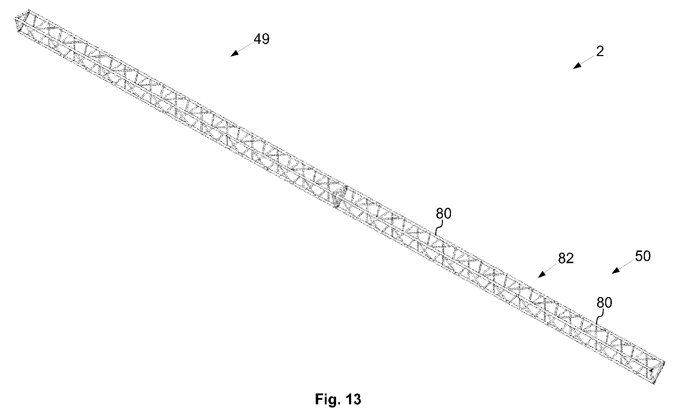

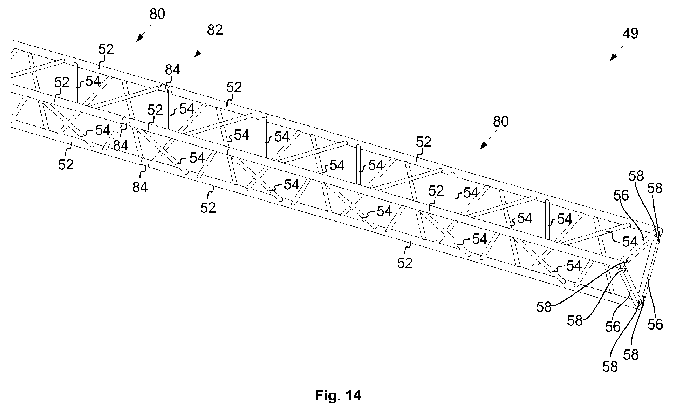

Abschließend wird auf einen Wärmebewegungsausgleich der Anschlussvorrichtung 2 anhand der Fig. 13 bis 15 näher eingegangen.

Wie in Fig. 13 angedeutet, können einzelne oder auch alle der Balken 49, 50, 51 der Anschlussvorrichtung 2 aus Teilbalken 80 ausgeführt sein. In Fig. 13 ist der zweite Balken 50 aus zwei Teilbalken 80 ausgeführt, die über eine Schwimmlagerung 82 miteinander verbunden sind.

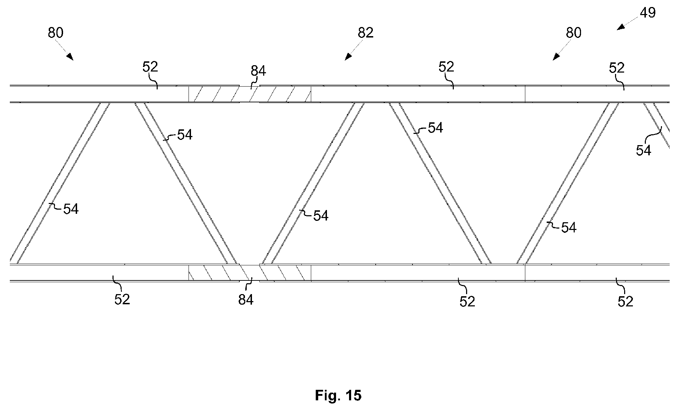

Zur Schwimmlagerung 82 sind die einzelnen Längsstäbe 52 des entsprechenden Balkens 50, wie in Fig. 15 gezeigt, rohrförmig ausgebildet. An der Stelle der Schwimmlagerung 82 sind die rohrförmigen Längsstäbe 52 nach außen hin geöffnet, wobei in die rohrförmigen Längsstäbe 52 ein Gleitstab 84 eingesetzt ist, auf denen wenigstens einer der Teilbalken 80 gleitend gelagert ist. Am anderen der beiden Teilbalken 80 kann der Gleitstab 84 beispielsweise durch Verschweißen oder dergleichen stoff- und/oder kraftschlüssig befestigt sein.

Durch die Schwimmlagerung 84 können sich die Teilbalken 80 in Längsrichtung des zweiten Balkens 50 relativ zueinander bewegen und so Wärmebewegungen ausgleichen.

## Patentansprüche

1. Vorrichtung (2) zum Koppeln eines in einer Stromschiene gehaltenen Fahrdrahtes (4) an ein Tragwerk (16), umfassend:
- einen sich in Bewegungsrichtung erstreckenden Grundkörper mit wenigstens einem ersten Balken (49) und einem zweiten Balken (50), der stirnseitig mit dem ersten Balken (49) gekoppelt ist,
- wenigstens ein erstes Anbindungselement (52) zum Koppeln des Grundkörpers an eine Hängevorrichtung (74), die eingerichtet ist, den Grundkörper an einem der Tragwerke (16) zu tragen, und
- wenigstens ein zweites Anbindungselement (52) zum Koppeln einer Haltevorrichtung (12, 42) an den Grundkörper, die eingerichtet ist, die Stromschiene mit dem Fahrdraht (4) zu halten.

2. Vorrichtung (2) nach Anspruch 1, wobei jeder Balken (49, 50) aus zu einem Fachwerk zusammengesetzten Streben (52, 54) ausgebildet ist.

3. Vorrichtung (2) nach Anspruch 1 oder 2, wobei der erste Balken (49) und der zweite Balken (50) winklig (64) zueinander angeordnet sind.

4. Vorrichtung (2) nach einem der vorstehenden Ansprüche, wobei der erste Balken (49) und der zweite Balken (50) über eine Form- und/oder Kraftschlussverbindung (57) mit wenigstens einem stiftartartigen Verbindungselement (60, 62) miteinander gekoppelt sind.

5. Vorrichtung (2) nach Anspruch 4, wobei die Form- und/oder Kraftschlussverbindung (57) wenigstens zwei stiftartige Verbindungselemente (60, 62) mit sich voneinander unterscheidenen Abstandhalterbereichen umfasst, die die Stirnseiten der Balken (49, 50) in unterschiedlichen Abständen (65) zueinander halten.

6. Vorrichtung (2) nach Anspruch 4 oder 5, wobei die stiftartigen Verbindungselemente (60) Schraubverbindungen sind, die einen Gewindestab (60) und wenigstens eine Mutter (62) umfassen.

7. Vorrichtung (2) nach Anspruch 6, wobei die Mutter (62) über ein Kugelpfannenlager (68) gegen eine der Stirnseiten eines der Balken (49, 50) verschraubt ist.

8. Vorrichtung (2) nach einem der Ansprüche 4 bis 7, wobei die Form- und/oder Kraftschlussverbindung (57) im Bereich des ersten Anschlusselementes (52) angeordnet ist.

9. Vorrichtung (2) nach einem der vorstehenden Ansprüche, wobei der wenigstens der zweite Balken (50) zwei Teilbalken (80) umfasst, die gegeneinander schwimmend (82) gelagert sind.

10. Vorrichtung (2) nach Anspruch 8, wobei die Teilbalken (80) zur schwimmenden Lagerung (82) miteinander steckverbunden (84) sind.
